(19) Europäisches Patentamt
European Patent Office
Office européen des brevets

(11) EP 1 260 540 A1

(12) EUROPEAN PATENT APPLICATION

(43) Date of publication:
27.11.2002 Bulletin 2002/48

(51) Int Cl.[7]: C08J 5/18, B32B 27/32, C08L 23/06, C08L 23/16

(21) Application number: 01201920.4

(22) Date of filing: 22.05.2001

(84) Designated Contracting States:
AT BE CH CY DE DK ES FI FR GB GR IE IT LI LU MC NL PT SE TR
Designated Extension States:
AL LT LV MK RO SI

(71) Applicant: Atofina Research S.A.
7181 Seneffe (Feluy) (BE)

(72) Inventor: Marechal, Philippe
1400 Nivelles (BE)

# (54) Polyethylene film compositions with improved bubble stability

(57) Use of an improved bubble stability composition in the film blowing process comprising a homogeneous blend of a metallocene-catalysed medium density polyethylene (mMDPE) having a Dow Rheology Index (DRI) of at least $8/MI_2$ with linear low density polyethylene (LLDPE), to produce blown films, this composition essentially consisting of from 0.5 to 100 % by weight of mMDPE and of from 99.5% to 0 % by weight of LLDPE, based on the total weight of the blend. The blend is optionally coextruded with layers of LDPE and/or LLDPE and/or mMDPE and/or EVA and/or EBA and/or ionomers and/or polyisobutylene.

The films produced according to this invention achieve a combinaison of good mechanical properties, high rigidity and excellent processability.

EP 1 260 540 A1

## Description

The present invention relates to polyethylene compositions and films thereof with excellent processability properties, high stiffness and outstanding mechanical properties. These polyethylene compositions can therefore be used advantageously for film applications, requiring this unique combination of properties, such as but not exclusively, food or non-food packaging, personal care products, agricultural or industrial products.

Linear-low-density polyethylene (LLDPE) has excellent tear and impact properties however its application in films is limited because of its low stifness and poor processability . Indeed LLDPE leads to bubble instability and its extrusion is difficult. The situation is not improved for the metallocene catalysed LLDPE.

High pressure radicalar polymers such as Low density polyethylene (LDPE), polyethylene vinyl acetate copolymers (EVA), polyethylene butyl acetate copolymers (EBA) and the like exibit excellent optical properties and can be processed at low temperatures and pressures while maintaining a good melt strength. They have however limited possibilities for thin film applications or down-gauging, due to a low draw ratio, and a low stiffness. They exibit also a low impact resistance and low tear properties.

The addition of high pressure radicalar polymers such as LDPE to LLDPE in film formulation is well known. Films produced from those blends will have improved processability properties compared to films produced from pure LLDPE. Indeed, for those blends, the bubble stability will be improved, however their mechanical properties, and their down-gauging possibilities will be lower than those from pure LLDPE films. The stiffness of the blends remains low.

Wherever high rigidity is needed, LDPE and LLDPE compositions will require overly thick structures. Especially for LLDPE, where excellent impact and tear properties render its down-gauging capability useful, the lack of rigidity is a main drawback because high rigidity is a requirement for machining and/or product behaviour (e.g. creep resistance).

WO 95/27005 discloses mixtures of LDPE with LLDPE or metallocene-catalysed LLDPE (mLLDPE).

It is known that increasing density improves rigidity. Polyethylene prepared either by chromium or Ziegler-Natta catalyst having a density of from 0.925 to 0.965g/cm$^3$ called in this invention medium density polyethylene (MDPE) offer an improved rigidity, processability and down-gauging possibilities. MDPE however lacks the good optical properties of LDPE or LLDPE.

Blends of conventional MDPE with LLDPE can be used for improving rigidity and/or down-gauging and/or processability of LLDPE but it does not provide good optical properties and extrusion pressure remains high. This high extrusion pressure can lead to low extrusion output on a blown film machine.

Therefore, there exists a need for a MDPE/LLDPE polyethylene composition having improved extrusion ability and combining high rigidity with good mechanical properties and good optical properties.

EP-A-0844277 and its US equivalent 6,114,456 disclose polyethylene compositions for films that achieve a better balance between the good optical properties of LDPE and the good mechanical and processing properties of metallocene catalysed MDPE (mMDPE). However this specification does not address the problem of the production of a mMDPE/LLDPE polyethylene film with improved rigidity, mechanical properties and processability.

Easy processing metallocene polyethylene are described in Antec 1998, p.1816-1819. Those metallocene resins exibit a unique combination of easy processing and outstanding toughness when compared with mixtures of conventional polyethylene. Nothing is mentionned regarding mMDPE/LLDPE resin films.

It is therefore an object of the present invention to provide mMDPE/LLDPE compositions for films, prepared with one or more layers, that achieve high rigidity, high tear resistance in machine direction, good optics, a good processability and a good bubble stability in the film blowing process.

In the present invention, the bubble stability of the mMDPE/LLDPE compositions converted into films by the bubble technique is defined as a bubble which is particularly stable regarding wind sensitivity e.g. air motions in the extrusion room. The stability of the bubble is also defined as a bubble whose shape remains constant and whose risk of breaking during the film blowing process is weak. The bubble stability of the resins is further defined by the capacity to produce films with high draw down potential. The draw down potential indicates how thin the film can be drawn.

In the present invention, a film is defined as an extremely thin continuous sheet: the upper limit for thickness is of about 250 microns (Hawley's Condensed Chemical Dictionary, Twelfth Edition, Rev. by R.J.Lewis, Van Nostrand Reinhold Co., New York)

This invention concerns films prepared from a homogeneous blend of LLDPE having a density of lower than 0.932g/cm$^3$ with a mMDPE having a density of from 0.925 to 0.965 g/cm$^3$ and a Dow Rheology Index (DRI) of at least 8/$MI_2$, this blend consisting of from 0.5% to 100 % by weight of mMDPE and of from 99.5 % to 0% by weight of LLDPE, based on the total weight of the blend, and said blend being optionally coextruded with at least two layers, each layer being a blend comprising a mixture of polymers such as LDPE and/or LLDPE and/or very low density polyethylene (VLDPE) and/or mMDPE and/or polyethylene vinyl acetate copolymers (EVA) and/or polyethylene butyl acetate copolymers (EBA) and/or ionomers and/or polyisobutylene said layers being the same or different, and the metallocene catalyst system comprising a bridged metallocene compound, alone or in combination with another metallocene catalyst

which contributes less than 80% by weight of said catalyst combination.

The present invention is predicated on the surprising discovery by the inventor that by using mMDPE having a DRI of at least 8, preferably at least 20, more preferably at least 30 for a melt index ($MI_2$) of 1g/10 min or a DRI of at least 8/$MI_2$, preferably at least 20/$MI_2$, more preferably at least 30/$MI_2$ for a $MI_2$ different from 1g/10 min., the $MI_2$ being measured according ASTM D-1238 condition 190°C/2.16 kg, it is possible to produce polyethylene films combining high rigidity with downgauging opportunities , high tear resistance in machine direction and high bubble stability during extrusion.

Moreover those films tend to show interesting seal strength properties.

To characterize the rheological behavior of substantially linear ethylene polymers, S Lai and G.W. Knight introduced (ANTEC '93 Proceedings, Insite™ Technology Polyolefins (ITP)-New Rules in the Structure/Rheology Relationship of Ethylene &-Olefin Copolymers, New Orleans, La., May 1993) a new rheological measurement, the Dow Rheology Index (DRI) which expresses a polymer's "normalized relaxation time as the result of long chain branching". S.Lai et al; ( Antec '94, Dow Rheology Index (DRI) for Insite™ Technology Polyolefins (ITP): Unique structure-Processing Relationships, pp. 1814-1815) defined the DRI as the extent that the rheology of ethylene-octene copolymers known as ITP ( Dow's Insite Technology Polyolefins) incorporating long chain branching into the polymer backbone deviates from the rheology of the conventional linear homogeneous polyolefins that are reported to have no Long Chain Branching by the following normalized equation:

$$DRI = (365000\ (t_0/\eta_0)-1)/10$$

Where $t_0$ is the characteristic relaxation time of the material and $\eta_0$ is the zero shear viscosity of the material. The DRI is calculated from the best fitting by least squares analysis of the rheological curve (complex viscosity versus frequency) as described in US 6114486 with the following generalized Cross equation, i.e.

$$\eta = \eta_0 / (1 +(\gamma\ t_0)^n)$$

where n is the power law index of the material, $\eta$ and $\gamma$ are the measured viscosity and shear rate data respectively. The dynamic rheological analysis was performed at 190°C and the strain amplitude was 10%. Results are reported according to ASTM D 4440.

High DRI values mean different chain architecture and probably more long chain branching in the polymer.

Without being bound by a theory, it has been observed that when the dynamic rheological analysis is performed at lower temperature, higher DRI values can be obtained and vice versa.

DRI values ranging from zero for polymers which do not have measurable long chain branching to about 15 are known and have been desribed in several U.S. patents such as for example U.S. Patents N° 6114486, 5674342, 5631069.

The manufacture of the low density and linear low density polyethylenes used in the present invention is known in the art and is described for example in "Encyclopedia of Polymer Science and Engineering", second edition, Volume 6, on pages 404 to 410 (LDPE) and pages 436 to 444 (LLDPE).

The catalyst system used in the present invention to manufacture medium density polyethylene comprises a bridged metallocene compound such as described in EP-A-0790259, preferably a bis tetrahydro-indenyl compound (THI) of the general formula $(IndH_4)_2R''MQ_2$ in which each $IndH_4$ is the same or different and is tetrahydro-indenyl or substituted tetrahydro-indenyl, R" is a bridge which comprises a $C_1$-$C_4$ alkylene radical, a dialkyl germanium or silicon or siloxane, or an alkyl phosphine or amine radical, which bridge is substituted or unsubstitued, M is a Group IV metal or vanadium and each Q is hydrocarbyl having 1 to 20 carbon atoms or halogen.

The preferred bis tetrahydro-indenyl catalyst may be substituted in the same way or differently from one another at one or more positions in the cyclopentadienyl ring, the cyclohexenyl ring and the ethylene bridge.

Each substituent group may be independently chosen from those of formula $XR_v$ in which X is chosen from group IVA, oxygen and nitrogen and each R is the same or different and chosen from hydrogen or hydrocarbyl of from 1 to 20 carbon atoms and v+1 is the valence of X. X is preferably C. If the cyclopentadienyl ring is substituted, its substituent groups must not be so bulky as to affect coordination of the olefin monomer to the metal M. Substituents on the cyclopentadienyl ring preferably have R as hydrogen or $CH_3$. More preferably, at least one and most preferably both cyclopentadienyl rings are unsubstituted.

In a particularly preferred embodiment, both tetrahydro-indenyls are unsubstituted.

R" is preferably an ethylene bridge which is substituted or unsubstituted.

The metal M is preferably zirconium, hafnium or titanium, most preferably zirconium. Each Q is the same or different and may be a hydrocarbyl or hydrocarboxy radical having 1-20 carbon atoms or a halogen. Suitable hydrocarbyls include aryl, alkyl, alkenyl, alkylaryl or aryl alkyl. Each Q is preferably halogen.

Ethylene bis (4, 5, 6, 7-tetrahydro-1-indenyl) zirconium dichloride is a particularly preferred bis tetrahydro-indenyl compound of the present invention.

The metallocene catalyst component used in the present invention can be prepared by any known method. A preferred preparation method is described in J. Org. Chem. 288, 63-67 (1985).

Any metallocene catalyst known in the art as suitable for the polymerization of olefins can be used in combination with the bis tetrahydro-indenyl compound, in an amount not to exceed 80% by weight of said combination.

These are described for example in EP-A-0790259.

The cocatalyst which activates the metallocene catalyst component can be any cocatalyst known for this purpose such as an aluminium-containing cocatalyst or a boron-containing cocatalyst. The aluminium-containing cocatalyst may comprise an alumoxane, an alkyl aluminium and/or a Lewis acid.

The alumoxanes used in the process of the present invention are well known and preferably comprise oligomeric linear and/or cyclic alkyl alumoxanes represented by the formula:

(I) R-(A1-O)n-A1R2
|
R

for oligomeric, linear alumoxanes and

(II) (-A1-O-)m
|
R

for oligomeric, cyclic alumoxane,
wherein n is 1-40, preferably 10-20, m is 3-40, preferably 3-20 and R is a C1-C8 alkyl group and preferably methyl.

Generally, in the preparation of alumoxanes from, for example, aluminium trimethyl and water, a mixture of linear and cyclic compounds is obtained.

Suitable boron-containing cocatalysts may comprise a triphenylcarbenium boronate such as tetrakis-pentafluorophenyl-borato-triphenylcarbenium as described in EP-A-0427696, or those of the general formula [L'-H] + [B Ar1 Ar2 X3 X4]- as described in EP-A-0277004 (page 6, line 30 to page 7, line 7).

The metallocenes may be supported. In the event it is supported, the support used in the present invention can be any organic or inorganic solids, particularly porous supports such as talc, inorganic oxides, and resinous support material such as polyolefin. Preferably, the support material is an inorganic oxide in its finely divided form.

Suitable inorganic oxide materials which are desirably employed in accordance with this invention include Group 2a, 3a, 4a or 4b metal oxides such as silica, alumina and mixtures thereof. Other inorganic oxides that may be employed either alone or in combination with the silica, or alumina are magnesia, titania, zirconia, and the like. Other suitable support materials, however, can be employed, for example, finely divided functionalized polyolefins such as finely divided polyethylene.

Preferably, the support is a silica having a surface area comprised between 100 and 1000 m2/g and a pore volume comprised between 0.5 and 4 ml/g.

The amount of alumoxane and metallocene usefully employed in the preparation of the solid support catalyst can vary over a wide range. Preferably, the aluminium to transition metal mole ratio is comprised between 1:1 and 100:1, preferably between 5:1 and 70:1.

In the present invention, the mMDPE is monomodal or bimodal or multimodal.

The metallocene catalyst utilized to produce the medium density polyethylene required by the present invention can be used in gas, solution or slurry polymerizations. Preferably, in the present invention, the polymerization process is conducted under slurry phase polymerization conditions. It is preferred that the slurry phase polymerization conditions comprise a temperature of from 20 to 125°C, preferably from 60 to 110°C and a pressure of from 0.1 to 8 MPa, preferably from 2 to 5 MPa for a time between 10 minutes and 4 hours, preferably between 0.4 and 2.5 hours.

It is preferred that the polymerization reaction be run in a diluent at a temperature at which the polymer remains as a suspended solid in the diluent. Diluents include, for examples, propane, isobutane, n-hexane, n-heptane, methylcyclohexane, n-pentane, n-butane, n-decane, cyclohexane and the like as well as mixtures thereof. The preferred diluent is isobutane. The diluent can be under liquid or super critical state.

According to a preferred embodiment of the present invention, a continuous reactor is used for conducting the polymerization. This continuous reactor is preferably a loop reactor. During the polymerization process, at least one monomer, the catalytic system and a diluent are flowed in admixture through the reactor.

Alternatively for a bimodal production of mMDPE two reactors in series can be used.

In the present invention average molecular weights can be further controlled by the introduction of some amount of hydrogen or by changing the temperature during polymerization. When hydrogen is used it is preferred that the relative amounts of hydrogen and olefin introduced into the polymerization reactor be within the range of about 0.001 to 15 mole percent hydrogen and 99.999 to 85 mole percent olefin based on total hydrogen and olefin present, preferably about 0.2 to 3 mole percent hydrogen and 99.8 to 97 mole percent olefin.

In this specification, the density of the polyethylene is measured at 23 °C using procedures of ASTM D 1505.

The densities of the mMDPE used in the present invention are regulated by the amount of comonomer injected in the reactor; they will range from 0.925 $g/cm^3$ to 0.965 $g/cm^3$ and preferably from 0.930 $g/cm^3$ to 0.960 $g/cm^3$. Examples of comonomer which can be used include 1-olefins propylene, butene, hexene, octene, 4-methyl-pentene, and the like, as well as mixtures thereof up to C12 olefins, the most preferred being hexene. Homopolymers of ethylene may also be used.

The melt indices of the mMDPE used in the present invention can be regulated by the amount of hydrogen injected in the reactor; they will range from 0.1 g/10' to 15 g/10', preferably from 0.2 g/10' to 4 g/10'.

Research has been conducted on metallocene catalysts leading to a very wide range of polyethylene products with both narrow and broad molecular weight distribution (MWD).

In changing the MWD, resins are obtained with largely different viscous behaviour. The shear response sensitivity is commonly expressed by the ratio (SR2) of melt flows (ASTM D-1238-89A at 190°C) with loads of 21.6 kg (HLMI) and 2.16 kg (MI2). Linear resins with a narrow MWD have typical SR2 values of about 15. The resins of the present invention have values going from the typical low values of about 15 for narrow MWD resins to values ranging from 15 to 100 depending on the bridged metallocene catalyst used for polymerisation, the production conditions and the M12-value of the resulting resin.

Standard additives such as antioxidants may be used for both long term and processing stabilization and if desired, one or more pigments and/or dyes and/or processing aids like fluoro elastomers can also be added.

Antistatic, antifog, antiblocking or slip additives may also be added.

The mMDPE catalysed by the procedure described hereabove are used in blends with Ziegler Natta or metallocene catalysed LLDPE in various ratios.

According to embodiments of the present invention, compositions of LLDPE with mMDPE are obtained either by preliminary dry blend or extrusion or by direct blend in the hopper or via a side extruder.

Materials are run under production conditions for existing commercial applications

where processability, downgauging, rigidity, good optics and excellent outputs are key issues.

Generally, the blends of the present invention comprise from 0.5 % to 100% by weight of mMDPE having a DRI of at least $8/MI_2$ and from 99.5% to 0% by weight of LLDPE based on the total weight of the blend. Preferably the composition of the present invention comprises at least 10 % by weight of mMDPE having a DRI of at least $8/MI_2$ and from 90 % to 0% by weight of LLDPE based on the total weight of the blend, more preferably at least 20 % by weight of mMDPE having a DRI of at least $8/MI_2$ and from 80 % to 0% by weight of LLDPE

The film is produced by coextruding the mMDPE/LLDPE blend described hereabove with one or more optional layers, each layer being a blend comprising a mixture of polymers such as LDPE and/or LLDPE and/or mMDPE and/or VLDPE and/or EVA and/or EBA and/or ionomers and/or polyisobutylene. The LDPE and/or LLDPE and/or VLDPE and/or EVA and/or EBA and/or polyisobutylene are commercially available grade on the market. The optional layers may be the same or different and each layer is from 0 to 33 wt% and preferably from 5 to 30 wt% of the total weight of the film.

LLDPE and VLDPE can be obtained from metallocene catalysts.

Good transparency and gloss are obtained for all the compositions tested in the above mentioned ranges.

The blown film is produced by the steps of:

a) preparing a first optional blend comprising a mixture of polymers such as LDPE and/or LLDPE and/or mMDPE and/or VLDPE and/or EVA and/or EBA and/or ionomers and/or polyisobutylene.

b) preparing a second blend of from 0.5 % to 100 % by weight of a mMDPE having a DRI of at least $8/MI_2$ with 99.5 % to 0% by weight of a linear low density polyethylene (LLDPE) based on the total weight of the blend, and the metallocene catalyst system consisting of a bridged metallocene compound, alone or in combination with

another metallocene catalyst which contributes less than 80 % by weight of said metallocene;
c) preparing a third optional blend comprising a mixture of polymers such as LDPE and/or LLDPE and/or mMDPE and/or VLDPE and/or EVA and/or EBA and/or ionomers and/or polyisobutylene said composition being the same or different from the composition of step a);
d) extruding either the blend of step b) or coextruding the blends of step a), b), and c) in any order, said blend of step b) representing from 33 to 100% by weight of the total weight of the film.
e) blowing the (co)extrudate of step d).

In one preferred embodiment, the mMDPE used has a DRI of at least $20/MI_2$, preferably at least $30/MI_2$. The films prepared according to this invention combine good tear resistance in machine direction (MD) and improved rigidity allowing downgauging opportunities. Those mMDPE/LLDPE resins are also easy to process. In particular, they present low extrusion pressure and good bubble stability.
The compositions as described here above may also be used in the production of multilayer films, lamination films, barrier films.
These films may also be metallized, corona treated, reticulated under radiations, printed and laminated.

EXAMPLES:

1. Polymerization procedure and product composition.

The polymerization of mMDPE (Resin R1) of the present invention was carried out in a liquid-full slurry loop reactor. Ethylene was injected with 1-hexene together with the catalyst. Isobutane was used as diluent. The polymerization conditions are indicated in Table I

TABLE I

| | Resin R1 |
|---|---|
| C2 feed (kg/h) | 3900 |
| C6 feed (g/kg C2) | 22 |
| H2 feed (g/t) | 42 |
| Iso C4 feed (kg/h) | 1940 |
| Tibal conc (ppm) | 100-200 |
| Tpol (°C) | 90 |
| C2 = ethylene<br>C6 = 1-hexene<br>Iso C4 = isobutane<br>TIBAL = triisobutylaluminium | |

The bridged metallocene catalyst was ethylene bis (tetrahydro-indenyl) zirconium dichloride supported on a silica support which had been treated with a cocatalyst comprising methylalumoxane (MAO).
The resin R1 produced according to the above polymerization conditions is a high DRI mMDPE. For film applications, Long Chain Branching starts to show its influence on DRI at values that are above 2 for narrow molecular weight distribution resins produced either by Ziegler Natta or metallocene catalysts.
The data concerning resin R1 are summarised in Table II.

TABLE II.

| | R1 |
|---|---|
| Density $g/cm^3$ | 0.934 |
| MI2 g/10 min | 0.9 |
| DRI | 36 |
| SR2=HLMI/MI2 | 30 |

The DRI of R1 was determined by fitting the generalized Cross equation on the complex viscosity measured according to ASTM D4440 by using a RDA 700 from Rheometrics, a diameter plate-plate of 25 mm and a gap between plates of 2 mm +/- 0.2 mm. The apparatus was calibrated according to ARES Instrument normal 902-30004 . The rheological measurements were performed at 190°C under nitrogen and the frequency of the test was performed at

10% of strain.

2. Film preparation.

*The resin R1 (mMDPE) was then blended with a LLDPE in the proportions of 30 % by weight of resin R1 (mMDPE) and 70 % by weight of LLDPE .
*A comparison blend was prepared by mixing 30 % by weight of LDPE and 70 % by weight of LLDPE.
Two films were blown on a Macchi blown film line equipment using a low density configuration characterised by a die of 120 mm, a BUR of 2.5:1 and a die gap of 2.2 mm. Both films were down-gauged to a thickness of 40 microns.
A third film was prepared from pure LLDPE similarly as for the previous films mMDPE/LLDPE and LDPE/LLDPE hereabove.

3. Film properties.

Tear properties (Elmendorf) in machine direction (MD) and in transverse direction (TD) as well as impact properties (Dart), yield stress, and secant modulus are given in Table I.

Table 1

| | LDPE/LLDPE FE8000/FG106 30% / 70% | mMDPE/LLDPE R1/FG106 30% / 70% | LLDPE FG106 100% |
|---|---|---|---|
| Density (g/cm$^3$) | 0.918 | 0.922 | 0.918 |
| Dart impact (g) | 120 | 120 | 281 |
| Elmendorf Tear MD (N/mm) | 81 | 121 | 162 |
| Elmendorf Tear TD (N/mm) | 220.5 | 223 | 210 |
| Yield stress (MPa) | 12.7 | 15 | 12.7 |
| Secant modulus at 1% (MPa) | 200 | 260 | 200 |

FE 8000 is a LDPE from Atofina known under the trade mark Lacqtene$^R$ characterized by a density of 0.924 g/cm3.
FG106 is a Ziegler-Natta LLDPE from Polimeri known under the trade mark Clearflex$^R$ having a DRI of 0.6 and characterized by a density of 0.918 g/cm3.
As known pure LLDPE offers excellent dart and tear properties.
It can been seen from table I that the Elmendorf tear for the blend mMDPE/LLDPE is significantly better in the machine direction than for the blend LDPE/LLDPE. Regarding the Elmendorf tear in the transverse direction, there is no difference between the two blends.
Table 1 illustrates also that the yield stress and the secant modulus at 1% for the blend mMDPE/LLDPE is increased compared to the blend LDPE/LLDPE. The films produced from mMDPE/LLDPE blends will have a better rigidity than those of LDPE/LLDPE films which will allow draw down possibilities.
Besides those improved properties, the addition of mMDPE to LLDPE allows also an easier processing as shown by table 2. Using the extrusion pressure as measurement for processability, it is clearly shown that addition of mMDPE to LLDPE decreases the extrusion pressure. The most important decreasing of the extrusion pressure is obtained with low amounts of mMDPE, between 1 and 20%.

Table 2

| % mMDPE (R1) | % LLDPE (FG106) | Extrusion Pressure (bars) |
|---|---|---|
| 0 | 100 | 324 |
| 30 | 70 | 303 |
| 70 | 30 | 296 |
| 100 | - | 284 |

It has also been observed that the addition of mMDPE (R1) to LLDPE (FG106) provides a better stability to the bubble than pure LLDPE.

Table 3 shows the extrusion behaviour of a mMDPE/LLDPE blend compared to pure LLDPE and to a LDPE/LLDPE blend when extruded on LLDPE machine (characterised by a die land/die gap ratio of 5:1), on a standard machine (characterised by a die land/die gap ratio of 10-20:1) and on a LDPE machine (characterised by a die land/die gap ratio of 30:1).

The bubble stability of the resin is measured in terms of the bubble wind sensitivity to air motions in the extrusion room.

Further the bubble stability of the resin is also measured in terms of bubble dancing indicating how the frost line height (FLH) moves up and down and how stable is the bubble shape below the frost line height. The diameter of the inflated resin bubble has also been measured. The diameter of the bubble, in centimeters (cm) is measured at a distance of about one third from the die.

The frost line is defined as the line formed on the bubble due to the crystallization of the resin occuring during its cooling process. The height of the frost line, in centimetres (cm), is measured from the die.

The bubble stability is also measured in terms of risk of break of the bubble during the blowing process and when reaching the limited draw down of the resin.

The draw down potential indicates how thin the film can be drawn.

Table 3

| | **Resin compositions** | | |
|---|---|---|---|
| Processing criteria | LLDPE | mMDPE (30%) /LLDPE (70%) | LDPE (30%) /LLDPE (70%) |
| Extrusion pressure (bar) | 330 | 300 | 320 |
| **Extrusion on LLDPE machine** | | | |
| Wind sensitivity | Bubble moving when entering the extrusion room | No significant change of bubble shape when entering the extrusion room | No significant change of bubble shape when entering the extrusion room |
| Bubble dancing | FLH moving up and down by 10 cm Diameter changing periodically by +/- 2 cm | FLH moving up and-down by 5cm Diameter changing periodically by +/-1 cm | FLH moving up and down by 5 cm Diameter changing periodically by +/- 1 cm |
| Risk of break | Three breaks when transiting to pure LLDPE | No break | No break |
| Draw down potential. as thinnest film thickness | 10 µm | < 5 µm | Break at 9 µm |
| **Extrusion on standard machine** | | | |
| Wind sensitivity | | No significant change of bubble shape when entering the extrusion room | No significant change of bubble shape when entering the extrusion room |
| Bubble dancing | | FLH moving up and-down by 10 cm Diameter changing periodically by +/- 2 cm | FLH moving up and down by 10 cm Diameter changing periodically by +/- 2 cm |
| Risk of break | | No break experienced | Break at 5.5 µm |
| Draw down potential | | < 5 µm | Break at 5.5 µm |
| **Extrusion on LDPE machine** | | | |
| Wind sensitivity | | No significant change of bubble shape when entering the extrusion room | No significant change of bubble shape when entering the extrusion room |

Table 3 (continued)

| Extrusion on LDPE machine | | | |
|---|---|---|---|
| Bubble dancing | | FLH moving up and down by 15 cm Diameter changing periodically by +/- 3 cm | FLH moving up and down by 15 cm Diameter changing periodically by +/- 3 cm |

Table 3 shows that the bubble stability of the mMDPE/LLDPE blend in terms of wind sensitivity, bubble dancing, risk of break is as good as the bubble stability of the LDPE/LLDPE blend when the resin is extruded either on LLDPE machine, or on standard machine or on LDPE machine. The mMDPE/LLDPE blend has a better draw down potential compared to a LDPE/LLDPE blend when extruded on LLDPE and on standard machines.
The bubble stability of the blend mMDPE/LLDPE is sigificantly improved in terms of wind sensitivity, bubble dancing, risk of break and draw down potential compared to pure LLDPE when extruded on LLDPE machine.
Those results confirm that the mMDPE/LLDPE resin may be extruded at lower extrusion pressure either on a LLDPE or a standard or a LDPE machine with an outstanding bubble stability which allows to produce films having a draw down potential of less than 5 μm.
The improved processability properties of the mMDPE / LLDPE blend will allow to achieve high processing yields during film production.
Compared to a LDPE/LLDPE blend, a 30% mMDPE/ 70% LLDPE blend characterised by a mMDPE having a DRI of 30 and a M12 of 1 or a 25% mMDPE/75% LLDPE blend characterised by a mMDPE having a DRI of 50 and a M12 of 1 will have about the same bubble stability as a 20% LDPE/ 80% LLDPE blend.

To measure the film properties, the following methods were used:

The Elmendorf tear was measured using the method of ASTM D -1922.
The dart impact was measured according to the method of ASTM D -1709 The stress at yield was measured according to the method of ASTM D - 882 with a traction speed of 500 mm/min and a sample length of 5 cm.
The secant modulus at 1% was measured according to the method of ASTM D-882 with a traction speed of 5 mm/min and a sample length of 25 cm.
It has also been observed that the mMDPE/LLDPE films according to the present invention improve seal strength as compared to LDPE/LLDPE films.
Forty micron thick blown film of 30 wt% mMDPE/ 70 wt% LLDPE blend was heat sealed onto itself and the seal strength was investigated using varying sealing temperature in comparison with a 25 wt% LDPE/ 75 wt% LLDPE under the same sealing conditions. The films were heat sealed for a period of 1 second under a force of 0.3N/mm$^2$. The strength of the seals was then measured according to ASTM D-882 with a traction speed of 200 mm/min and a sample length of 5 cm.
The results are shown in table 4.

Table 4

| | LDPE/LLDPE | mMDPE/LLDPE | LLDPE |
|---|---|---|---|
| | FE8000/FG106 | R1/LLDPE | FG106 |
| | 25%/75% | 30%/70% | 100% |
| Sealing temperature (°C) | strength of seal (Mpa) | strength of seal (Mpa) | strength of seal (Mpa) |
| 110 | 0 | 0 | 0 |
| 115 | 7.2 | 1.5 | 7.9 |
| 120 | 8.2 | 7.9 | 7.9 |
| 125 | 9.6 | 10 | 9.2 |
| 130 | 9.3 | 10.4 | 9.6 |
| 135 | 9.6 | 11.1 | 10.5 |
| 140 | 9.6 | 11.4 | 10.7 |

It may be seen from table 4 that at sealing temperatures of from 125°C to 140° the blend 30 wt% mMDPE/ 70 wt% LLDPE present an enhancement of the seal strength as compared to the 25 wt% LDPE/ 75 wt% LLDPE blend.

This provides manufacturing advantages such as shorter sealing time allowing productivity increase through a larger number of seals per unit of time or a reduced energy consumption.

## Claims

**1.** Use of a composition with improved bubble stability in the film blowing process said composition comprising:

(i) An optional first layer based on a blend comprising a mixture of polymers such as low density polyethylene (LDPE) and/or a linear low density polyethylene (LLDPE) and/or a metallocene medium density polyethylene (mMDPE) and/or EVA and/or EBA and/or ionomers and/or polyisobutylene.
(ii) a second layer of a homogeneous blend of a linear low density polyethylene (LLDPE) having a density lower than 0.932 g/cm3 with a metallocene catalysed medium density polyethylene (mMDPE) having a density of from 0.925 to 0.965 g/cm$^3$ and a Dow Rheology Index ( DRI) of at least 8/$MI_2$, this blend consisting of from 0.5% to 100% by weight of mMDPE and of from 99.5% to 0% by weight of LLDPE based on the total weight of the blend and the metallocene catalyst system consisting of a bridged metallocene compound, alone or in combination with another metallocene catalyst which contributes less than 80% by weight of said metallocene;
(iii) an optional third layer based on a blend comprising a mixture of polymers such as low density polyethylene (LDPE) and/or a linear low density polyethylene (LLDPE) and/or a metallocene medium density polyethylene (mMDPE) and/or EVA and/or EBA and/or ionomers and/or polyisobutylene, said third layer being the same as or different from the first layer

to prepare high rigidity and tear resistant films

**2.** The use according to claim 1 wherein the metallocene catalysed medium density polyethylene has a DRI of at least 20/$MI_2$.

**3.** The use according to claim 1 wherein the metallocene catalysed medium density polyethylene has a DRI of at least 30/ $MI_2$.

**4.** The use according to claim 1 wherein the blend in the second layer comprises at least 10 % by weight of mMDPE.

**5.** The use according to claim 1 or claim 4, wherein the bridged metallocene catalyst is a bis tetrahydro-indenyl compound.

**6.** The use according to any one of the preceding claims, wherein the bridged metallocene is a ethylene bis tetrahydro-indenyl zirconium compound.

**7.** The use according to any one of the preceding claims, wherein the two external layer have the same composition.

**8.** The use according to any one of the preceding claims wherein the optional first layer (i) and/or the optional third layer (iii) are based on a blend comprising LDPE and/or LLDPE.

**9.** The use according to claim 8 wherein the LLDPE of the optional first layer if present and/or of the optional third layer if present can be replaced in part or in total by mMDPE.

**10.** The use according to any one of the preceding claims, wherein each of the two external layers represent from 5 to 33 wt % of the total weight of the film.

**11.** The use according to any one of the preceding claims, wherein the two external layers have the same thickness.

European Patent Office

# EUROPEAN SEARCH REPORT

Application Number
EP 01 20 1920

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 870 802 A (FINA RESEARCH) 14 October 1998 (1998-10-14) * claims; examples * | 1-14 | C08J5/18 B32B27/32 C08L23/06 C08L23/16 |
| D,X | EP 0 844 277 A (FINA RESEARCH) 27 May 1998 (1998-05-27) * claims; examples * | 1-14 | |

TECHNICAL FIELDS SEARCHED (Int.Cl.7)
B32B
C08J
C08L

The present search report has been drawn up for all claims

| Place of search | Date of completion of the search | Examiner |
|---|---|---|
| THE HAGUE | 15 October 2001 | De Jonge, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 01 20 1920

This annex lists the patent family membersrelating to the patent documents cited in the above-mentioned European search report.
The members are as contained in the European Patent Office EDP file on
The European Patent Office is in no way liable for these particulars which are merely given for the purpose of information.

15-10-2001

| Patent document cited in search report | | Publication date | Patent family member(s) | | Publication date |
|---|---|---|---|---|---|
| EP 0870802 | A | 14-10-1998 | EP | 0870802 A1 | 14-10-1998 |
| | | | EP | 0844277 A1 | 27-05-1998 |
| | | | US | 6114456 A | 05-09-2000 |
| EP 0844277 | A | 27-05-1998 | EP | 0844258 A1 | 27-05-1998 |
| | | | EP | 0870802 A1 | 14-10-1998 |
| | | | EP | 0844277 A1 | 27-05-1998 |
| | | | US | 6114456 A | 05-09-2000 |

EPO FORM P0459

For more details about this annex : see Official Journal of the European Patent Office, No. 12/82